Europäisches Patentamt

(19) European Patent Office

Office européen des brevets

(11) Veröffentlichungsnummer : **0 124 136**
**B1**

(12) **EUROPÄISCHE PATENTSCHRIFT**

(45) Veröffentlichungstag der Patentschrift :
**15.03.89**

(51) Int. Cl.⁴ : **G 01 M 7/00**

(21) Anmeldenummer : **84104948.9**

(22) Anmeldetag : **03.05.84**

(54) Verfahren und Einrichtung zum Steuern und Regeln von Schwingungs- und Betriebsfestigkeitsprüfanlagen.

(30) Priorität : **03.05.83 DE 3316138**

(43) Veröffentlichungstag der Anmeldung :
**07.11.84 Patentblatt 84/45**

(45) Bekanntmachung des Hinweises auf die Patenterteilung : **15.03.89 Patentblatt 89/11**

(84) Benannte Vertragsstaaten :
**AT CH DE FR GB IT LI NL SE**

(56) Entgegenhaltungen :
**ADVANCES IN INSTRUMENTATION, Band 29, Nr. 2II, 1974, Seiten 1-56, Pittsburgh, US; P. CHAPMAN et al.: "Digital vibration control techniques1"**

(73) Patentinhaber : **Schmidt, Alfons, Dr.-Ing.**
**Obere Hauptstrasse 10a**
**D-8057 Eching (DE)**

(72) Erfinder : **Schmidt, Alfons, Dr.-Ing.**
**Obere Hauptstrasse 10a**
**D-8057 Eching (DE)**

(74) Vertreter : **Lehn, Werner, Dipl.-Ing. et al**
**Hoffmann, Eitle & Partner Patentanwälte Arabellastrasse 4**
**D-8000 München 81 (DE)**

EP 0 124 136 B1

## Beschreibung

Die Erfindung bezieht sich auf ein Verfahren und eine Einrichtung zum Erzeugen eines Steuersignals zum Steuern und/oder Regeln von ein- oder mehrachsigen Schwingungs-oder Betriebsfestigkeitsprüfanlagen unter Einsatz von elektrodynamischen und/oder hydraulischen Prüfantrieben.

Bekannte derartige Steuer- und Regelanlagen sind im wesentlichen für die Steuerung eines Prüfantriebs, d. h. eines Schwingerregers mit Folgeregeleinrichtung konzipiert. Ein Funktionsgenerator liefert ein Führungssignal, das dem Sollwerteingang des Prüfantriebreglers zugeführt wird. Das Folgeverhalten des Prüfantriebes läßt sich durch geeignete Reglereinstellung zwar optimieren, ist jedoch insbesondere im höherfrequenten Bereich unbefriedigend.

Die bekannten Steuer- und Regelanlagen lassen sich in folgende zwei Gruppen einteilen :

1. Vorwiegend analoge sogenannte Regelgeneratoren für Sinusprüfungen mit fester oder gleitender Frequenz. Das oben erwähnte mangelnde Folgeverhalten wird hier durch eine Amplituden- bzw. Pegelregelung kompensiert. Diese Steuerungen erlauben nur Sinusanregung. Sie sind insbesondere nicht in der Lage Klirreffekte, d. h. Oberschwingungen aufgrund von Nichtlinearitäten, zu vermeiden, noch ist es möglich, mehrere Antriebe synchron mit festen Frequenzverhältnissen und vor allem vorgegebenen phasenrelationen zu betreiben.

2. Überwiegend mit analogen Rauschquellen und Filterbänken oder digital mit FFT-Methoden arbeitende Steuer- bzw. Regelanlagen für die Realisierung von transienten Belastungsverläufen bzw. von stationärer Rauschanregung, welche eine iterative Verbesserung des Nachfahrverhaltens erlauben. Diese Anlagen sind nicht oder nur aufwendig für gekoppelt mehrachsige Anlagensteuerung geeignet. Eine mehrkanalige Sinusanregung ist nicht oder allenfalls aufwendig für einachsigen Betrieb möglich.

Zusammenfassend kann festgestellt werden, daß bei den bekannten Verfahren und Einrichtungen für das Spektrum an Prüfsignalverläufen

einfrequente Sinusanregung

Transienten, insbesondere ein- oder mehrfrequente Schocks

mehrfrequentes, stationäres Rauschen

Betriebsfestigkeitsprozesse wie Blockprogramme, Markov'sche Prozesse mehrere Steuer- und Regelsysteme eingesetzt werden müssen.

Eine koordinierte Steuerung bzw. Regelung mehrachsiger Prüfantriebe ist nur sehr aufwendig möglich und beinhaltet vor allem nicht den mehrachsigen Sinus- bzw. Gleitsinusbetrieb.

Der Erfindung liegt die Aufgabe zugrunde, ein Verfahren und eine Einrichtung der eingangs beschriebenen Art zu schaffen, mit welchen die erwähnten Nachteile beseitigt werden, welche durch Verwendung bzw. den Einsatz moderner Mikroelektronik in Kombination mit verfügbaren Standard-Rechnersystemen durch optimale hard-softwareorientierte Schnittstellen wesentlich wirtschaftlicher sind und durch die damit mögliche, weitgehend freizügige Wahl von Prüfsignalverläufen nicht nur alle bekannten Prüfsignalverläufe ermöglichen, sondern auch die Einführung und Anwendung neuer problemorientierter Prüfverfahren. Das Verfahren und die Einrichtung sollen dabei sowohl für einachsige wie für gekoppelt mehrachsige Schwing- und Betriebsfestigkeitsprüfungen von Strukturen geeignet sein.

Diese Aufgabe wird verfahrensmäßig entsprechend dem Anspruch 1 und einrichtungsmäßig entsprechend dem Anspruch 5 gelöst.

Bei der Sollwertvorgabe wird zweckmäßig der PrüfantriebsFrequenzgang berücksichtigt.

Die Erfassung von Meßsignalen erfolgt vorteilhaft in einem festen Frequenzraster zur Ansteuerung. Dies bringt erhebliche Vorteile bei der Auswertung.

Zur Steuerung und Regelung mehrachsiger Prüfantriebe sind mehrere Prüfantriebe gekoppelt und werden über mehrere synchronisierte Kanäle mehrachsig bzw. mehrkanalig gesteuert bzw. geregelt.

Für mehrachsige bzw. mehrkanalige Steuerung bzw. Regelung sind mehrere synchronsierte Gruppen von Funktionsblöcken mit der zentralen Steuereinheit kommunizierend geschaltet.

Zweckmäßig weist der Funktionsblock Basisfunktionen und Optionen einen auf eine Speicherverwaltung geschalteten Zeit- bzw. Frequenzgeber, einen mit der Speicherverwaltung verbundenen ersten Signalspeicher, einen ersten D/A-Wandler und ein Analogmodul mit zusätzlichem Analogausgang zur Ausgabe des Steuersignals auf, die mit einem Digitalinterface verbunden sind, weist einen zweiten Signalspeicher und einen zweiten D/A-Wandler auf, die mit einer Schnittstelle für digitale Zusatzfunktionen verbunden sind, und weist einen Phasenmodul mit Phasenkorrektureingang und eine Anzeigeeinheit auf, wobei der Zeit- bzw. Frequenzgeber einen Synchronisiertakteingang und einen synchronsierten Meßtaktausgang hat. Der Analogmodul weist dabei zweckmäßig einen Analogausgang Sollwertvorgabe auf.

Vorteilhaft weist der Funktionsblock Zusatzfunktionen eine Amplitudenregeleinrichtung, eine Phasenregeleinrichtung und weitere Funktionsmoduln auf, die mit einem Digitalinterface verbunden sind.

Der Funktionsblock Pegelerfassung weist zweckmäßig je Kanal einen A/D-Wandler, einen Pegelspeicher und eine Speichererweiterung auf, die mit einem Digitalinterface verbunden sind.

Weiter ist die zentrale Steuereinheit vorteilhaft mit einer Einheit für Prüfablaufsteuerung und -überwachung und einer Einheit für Testauswertung und Dokumentation verbunden.

Schließlich sind die Funktionsblöcke und die zentrale Steuereinheit vorteilhaft über einen bidirektionalen Daten und Adreßbus mit 16 Bit parallel kommunizierend geschaltet.

Mit dem erfindungsgemäßen Verfahren und der erfindungsgemäßen Einrichtung, welche auf einem neuen Hard-Softwarekonzept basieren, wird ein Prüfsignalgenerator bzw. ein Abtastsystem mit variablem Abtastinkrement geschaffen, welche eine mehrachsige bzw. mehrkanalige Steuerung und Regelung mehrerer gekoppelter Prüfantriebe auf einfache Weise ermöglichen.

Die Erfindung ist im folgenden an Ausführungsbeispielen und anhand der Zeichnungen näher erläutert. In den Zeichnungen zeigen

Fig. 1 eine schematische Darstellung eines Funktionsblocks Basisfunktionen und Optionen gemäß der Erfindung,

Fig. 2 eine ausführlichere Darstellung des in dem Funktionsblock nach Fig. 1 verwendeten D/A-Wandler,

Fig. 3 eine schematische Darstellung des Funktionsblocks Zusatzfunktionen gemäß der Erfindung,

Fig. 4 und 5 ausführlichere Darstellungen der in dem Funktionsblock Zusatzfunktionen nach Fig. 3 verwendeten Amplitudenregeleinrichtung und Phasenregeleinrichtung,

Fig. 6 eine schematische Darstellung des Funktionsblocks Pegelerfassung gemäß der Erfindung, und

Fig. 7 ein Blockschaltbild eines mit den erfindungsgemäßen Funktionsblöcken aufgebauten Prüfsignalgenerators.

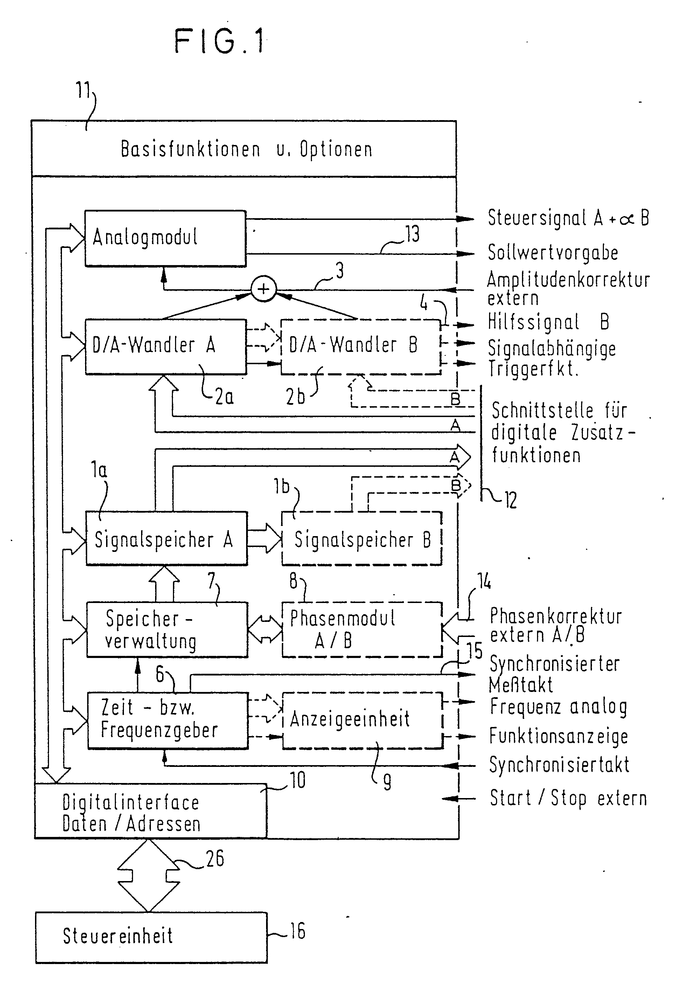

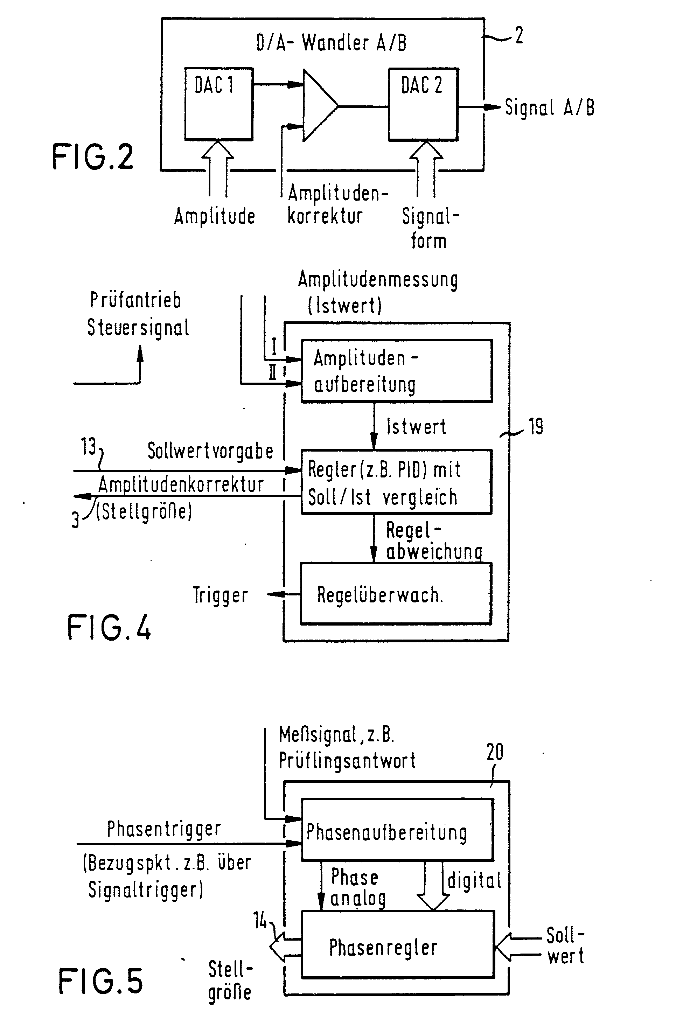

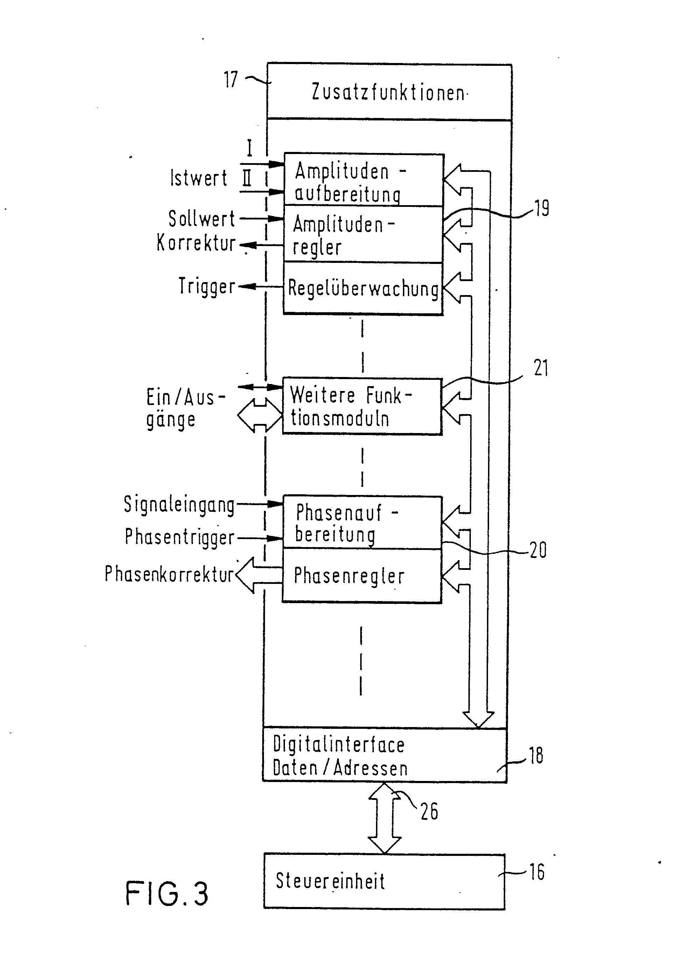

Wie in Fig. 1 dargestellt, können Steuersignalverläufe bzw. ein Steuersignal A oder A+α B beliebig vorgegeben werden, und zwar abgelegt in digitaler Form auf Signalspeichern 1a und 1b mit entsprechender Größe gemäß der Anzahl der Digitalwerte, z. B. 32 k x 16 Bit. Die Signalausgabe erfolgt in analoger Form als Steuersignal, und zwar jeweils über zwei multiplizierende D/A-Wandler 2a, 2b, wobei eine digitale Einstellung der Signalamplitude ermöglicht wird. Zwischen den beiden D/A-Wandlern 2a, 2b befindet sich ein zusätzlicher Analogeingang 3 für Regelzwecke, insbesondere externe Amplitudenkorrektur, vgl. auch Fig. 2.

Ein mit B bezeichnetes Hilfssignal läßt sich mit Hilfe der Signalspeicher 1a, 1b und der D/A-Wandler 2a, 2b zu einem mit A bezeichneten Hauptsignal als Option hinzufügen. Das Hilfssignal B kann wie das Hauptsignal A beliebigen Verlauf haben, wird aber mit Hilfe eines Zeit- bzw. Frequenzgebers 6 im gleichen Zeitraster wie das Hauptsignal A ausgegeben. Es steht als separates Signal an einem Hilfssignalausgang 4 zur Verfügung, z. B. Hauptsignal A Sinus, Hilfssignal B Kosinus usw., oder es läßt sich in einem Analogmodul 5 gewichtet zum Steuersignal addieren, so daß ein Steuersignal A oder ein Steuersignal A + αB ansteht. Das Analogmodul 5 erlaubt ferner die Addition eines programmierbaren Gleichanteiles sowie getrennt die analoge Vorgabe eines zeitabhängig programmierbaren Sollwertverlaufes an einem Analogausgang Sollwertvorgabe 13.

Der Ausgabetakt der digital abgelegten Signale und damit die Frequenz bzw. das Frequenzband des analogen Steuersignals bzw. des Hauptsignals A und des Hilfssignals B läßt sich über den Zeit- bzw. Frequenzgeber 6 vorgeben. Dieser Zeit- bzw. Frequenzgeber 6 liefert ferner an einem synchronisierten Meßtaktausgang 15 einen synchronen Meßtakt und läßt sich bei Mehrkanalbetrieb extern mit einem gemeinsamen Mastertakt oder Synchronisiertakt beaufschlagen. Der Zeit- bzw. Frequenzgeber 6 liefert in einem vorgegebenen Basis-Intervall, z. B. eine Oktave, eine vorgebbare Tastfrequenz mit entsprechend feiner Auflösung (z. B. 512 Schritte programmierbar).

Auslesefrequenzen, die über dem vorgegebenen Basisfrequenzintervall liegen, werden dadurch erzeugt, daß über eine Speicherverwaltung 7 jeweils eine entsprechende Anzahl Adressen ausgelassen werden, z. B. im Raster 2, 4, 8, 16 ... ; Auslesefrequenzen unterhalb des BasisfrequenzIntervalles werden dadurch realisiert, daß über die Speicherverwaltung 7 Signalwerte mehrfach, z. B. Faktoren 2, 4, 8, 16 ..., ausgegeben werden.

Ein Phasenmodul 8, einsetzbar sowohl für das Hauptsignal A als auch für das Hilfssignal B, erlaubt es, über ein Verschieben der Adresse des aktuell auszulesenden Signalwertes, programmiert feste Phasenrelationen zwischen Hauptsignal A und Hilfssignal B sowie zwischen verschiedenen Steuerkanälen bei Mehrkanalbetrieb einzustellen. Zusätzlich ist über einen externen Phasenkorrektureingang 14 eine externe Phasenaufschaltung, z. B. für Regelzwecke möglich. Über diesen digitalen externen Phasenkorrektureingang 14 lassen sich für das Hauptsignal A bzw. das Hilfssignal B die relativen Phasenlagen zusätzlich beeinflussen, z. B. zur Realisierung einer Phasenregelung mittels Zusatzfunktionen.

Die Basisfunktionen werden durch eine Anzeigeeinheit 9 für Signalfrequenz oder andere geeignete Werte ergänzt.

Über ein Digitalinterface 10, geeignet für Daten- und Adreßübertragung, lassen sich zum einen der bzw. die Signalspeicher 1a, 1b beschreiben, zum anderen können die einzelnen Funktionen adressiert und die zugehörigen Parameter wie Frequenz/Ausgabetakt, Phasenbeziehungen, Signalamplituden, Gleichanteil, Steuersignal, Sollwertvorgabe, verändert werden. Dies erfolgt z. B. über ein Prüfablaufprogramm, das von einer übergeordneten zentralen Steuereinheit 16, die z. B. ein Prozeßrechner oder ein Tischrechner mit entsprechender Schnittstelle ist, an die das Digitalinterface 10 angeschlossen ist, ausgeführt wird.

Der Funktionsblock Basisfunktionen und Optionen 11, realisiert in einzelnen Moduln, erlaubt also die Erzeugung eines analogen Steuersignalverlaufs, dessen beliebige Signalform auf einen Speicher abgelegt ist und dessen Parameter, wie Frequenz/Laufzeit, Amplitude, Phase, Gleichanteil, sich per Programm auch während des Signalablaufes verändern lassen. Auf diese Weise lassen sich gebräuchliche und/oder neue Testfunktionen, insbesondere

Sinus, Dreieck, Rechteck

Schocksignale bzw. Transienten, z. B. Sinus-Schwebung, Halbsinus, Erdbebenzeitverläufe

Stochasitsche Prozesse, z. B. stationäres Pseudo-Rauschen, Wiedergabe von Straßenprofilverläufen usw.

Betriebsfestigkeitsfunktionen, z. B. Blockprogramme, Markov'sche Prozesse
mit dynamisch programmierbaren und damit veränderbaren Signalparamtern realisieren. Optionelle Moduln, in Fig. 1 gestrichelt dargestellt, erlauben das Hinzufügen eines Hilfssignals B, das zum Hauptsignal A gewichtet addiert oder gesondert als Hilfssignal, z. B. für programmierbare Oberschwingungen zur Verminderung des Klirrfaktors, verwendet werden kann. Als weitere Funktionen sind signalabhängige Trigger, Anzeige für Frequenz oder andere Größen sowie ein externes Starten/Stoppen neben der programmäßigen Ausführung vorgesehen.

Zwischen den Signalspeichern 1a und 1b und den zugehörigen D/A-Wandlern 2a, 2b sind Schnittstellen 12 für digitale Zusatzfunktionen vorgesehen. Sie sind für den bisher beschriebenen Betrieb überbrückt und erlauben es, den jeweiligen Datenstrom A bzw. B über digitale Funktionsgeneratoren zu führen und damit zu verändern, wie es im Zusammenhang mit dem Funktionsblock Zusatzfunktionen 17 weiter erläutert ist.

Über den Analogausgang Sollwertvorgabe 13 sowie den zusätzlichen Analogeingang 3 Amplitudenkorrektur läßt sich eine Amplituden- bzw. Pegelregelung mit gleitendem Sollwertverlauf (Pegelverlauf) durchführen. Dabei läßt sich per Programm bereits bei der Sollwertvorgabe ein Prüfantriebs-Frequenzgang (Amplitude und Phase) berücksichtigen, was z. B. eine gegenüber herkömmlichen Methoden wesentlich bessere Regeldynamik zur Folge hat. Die Sollwertvorgabe kann aber auch unabhängig, z. B. für die Ansteuerung einer Temperaturregelung, verwendet werden.

Der Signalspeicher kann dabei repitièrend (periodische Signale, Pseudo-Rauschen usw.) oder einmalig (Schocks, Transienten) ausgegeben werden. Start/Stop erfolgt über die zentrale Steuereinheit 16 oder über einen externen Triggereingang. Eine weitere Betriebsart erlaubt es, an beliebigen Stellen des Signalverlaufes anzuhalten und wieder zu starten, z. B. für Versuche, bei denen Belastung und Entlastung zeitlich getrennt erfolgen (z. B. Zug-/Druck-Prüfmaschinen).

Der synchronisierte Meßtaktausgang 15 des Zeit- bzw. Frequenzgebers 6 liefert schließlich eine Tastfrequenz, die sich per Programm auf ein festes Zahlenverhältnis zum Auslesetakt der Signalwerte einstellen läßt und z. B. zur Ansteuerung der Moduln des Funktionsblocks Pegelerfassung 22 verwendet wird.

Die zentrale Steuereinheit 16 mit Betriebsprogramm (Steuern, Regeln, Messen) für ein- oder mehrkanaligen Betrieb ist z. B. ein Prozeßrechner, ein Tischrechner mit entsprechender Ein-/Ausgabe-Schnittstelle usw. Neben der zeitlichen Vorgabe der Prüfsignaiparameter und damit des Prüfablaufs läßt sich insbesondere im Zusammenspiel mit dem Funktionsblock Pegelerfassung 22 mit der zentraien Steuereinheit 16 das Übertragungsverhalten des Prüfsystems z. B. als Frequenzgang berechnen bzw. ermitteln. Damit lassen sich dann per Programm korrigierte Signalverläufe gegebenenfalls iterativ festlegen, die ein möglichst gutes Nachfahrverhalten eines vorgegebenen Belastungsverlaufes ergeben. Diese sogenannte Frequenzgangkorrektur läßt sich alternativ auch über ein digitales Filter an der Schnittstelle 12 quasi online realisieren, wobei dann die Filterparameter über die zentrale Steuereinheit 16 vorgegeben werden können.

Die zentrale Steuereinheit 16 dient ferner der Auswertung von Meßergebnissen, insbesondere im Zusammenhang mit der Pegelerfassung mittels des Funktionsblocks 22.

Fig. 3, 4 und 5 zeigen eine schematische Darstellung des Funktionsblocks Zusatzfunktionen 17. Die Zusatzfunktionen ergänzen bzw. erweitern die Möglichkeiten der Basisfunktionen, wie es bereits im Zusammenhang mit dem Funktionsblock Basisfunktionen und Optionen 11, insbesondere Schnittstelle 12, Analogausgang Sollwertvorgabe 13 und Phasenkorrektureingang 14 anhand der entsprechenden Schnittstellen aufgezeigt worden ist. Die programmierte Ansteuerung erfolgt über die Steuereinheit entsprechend der Beschreibung des Funktionsblocks Basisfunktionen und Optionen 11 über eine digitale Daten- und Adreßschnittstelle, wobei in der Steuereinheit das Interface für die Basisfunktionen herangezogen werden kann (gemeinsamer Digitalbus), oder aber ein davon unabhängiges zweites Interface (getrennte Busleitungen). Die Zusatzfunktionen können jeweils eine gewisse Anzahl von Moduln umfassen, die über ein Digitalinterface 18 für Daten- und Adreßübergabe (Funktionsadressen) per Programm angesprochen werden, und zwar vergleichbar oder identisch mit dem Digitalinterface 10.

Insbesondere sind folgende Zusatzfunktionen in dem Funktionsblock Zusatzfunktionen 17 für das System kennzeichnend:

Eine Amplituden- bzw. Pegel- bzw. Profilregeleinrichtung 19, welche insbesondere für die Kommunikation mit dem Analogausgang Sollwertvorgabe 13 entsprechend Fig. 4 vorgesehen ist. Typisches Anwendungsgebiet ist z. B. die Regelung eines beliebigen Belastungsprofils bei Gleitsinus in Abhängigkeit von der Frequenz. Dabei kann bei der Sollwertvorgabe der Prüfantriebsfrequenzgang berücksichtigt werden, womit der Verlauf der Regelabweichung minimiert und die Regeldynamik optimiert wird. Diese Funktionseinheit besteht aus einer Amplitudenaufbereitung, einem Regler (z. B. PID-Regler) sowie einer Regelüberwachung, mit der sich z. B. Überschreitungen von programmierten Grenzen für die Regelabweichung signalisieren lassen. Die Amplitudenaufbereitung sieht zwei per Programm umschaltbare Eingänge vor. Eingang I ist direkt für die Aufschaltung des Amplituden- bzw. Pegel-Ist-Verlaufes vorgesehen, (Messung z. B. Spitzenwert-oder quadratischer Mittelwert-Pegel extern), Eingang II führt auf eine Einheit, die aus einem Meßsignal den Amplituden- bzw. Pegelverlauf ermittelt.

Eine Phasenregeleinrichtung 20 im Funktionsblock Zusatzfunktionen, vergleiche auch Fig. 5, wirkt über einen geeigneten Regler digital auf den Phasenkorrektureingang 14 in der Weise, daß über entsprechende Adressenmodifikation eine zeitliche Verschiebung bei der Ausgabe aus dem Signalspeicher 1a bzw. 1b erfolgt, was sowohl für das Hauptsignal A als auch für das Hilfssignal B möglich ist. Die Phasenaufbereitung ermittelt für ein Meßsignal z. B. von einem Meßpunkt am Prüfling (90°/Resonanzregelung) die Phasenlage zu einem Meßtrigger, der z. B. als Signaltrigger von den Basisfunktionen geliefert wird. Im Phasenregler wird dann mit einem per Programm vorgebbaren Sollwert verglichen und über ein Regelgesetz die Phasenkorrektur digital dem Phasenkorrektureingang 14 zugeführt.

Unter weitere Funktionsmoduln 21 fallen insbesondere solche, die mit der Schnittstelle für digitale Zusatzfunktionen 12 (Signalfluß A bzw. B) kommunizieren. Das sind allgemein digitale Filter (Abtastung mit Basissystem synchronisiert), die z. B. ein- oder mehrachsige Frequenzgangkorrektur im Zeitbereich realisieren, wobei die Filterparameter per Programm vorgebbar bzw. änderbar sind. Als Spezialfall fallen darunter auch digitale Regler, die die zunächst erforderlichen Analogregler der Prüfantriebe ersetzen können. Beispielsweise wird dann beim Hydraulikantrieb eine unmittelbare Ansteuerung des Servoventiles möglich. Ferner sind auch Kombinationen der Funktionen Regeln und Frequenzgangkorrektur in einer Einheit kennzeichnend. Die Identifikation der Filterparameter erfolgt im Zusammenhang mit der Pegelerfassung in der zentralen Steuereinheit 16.

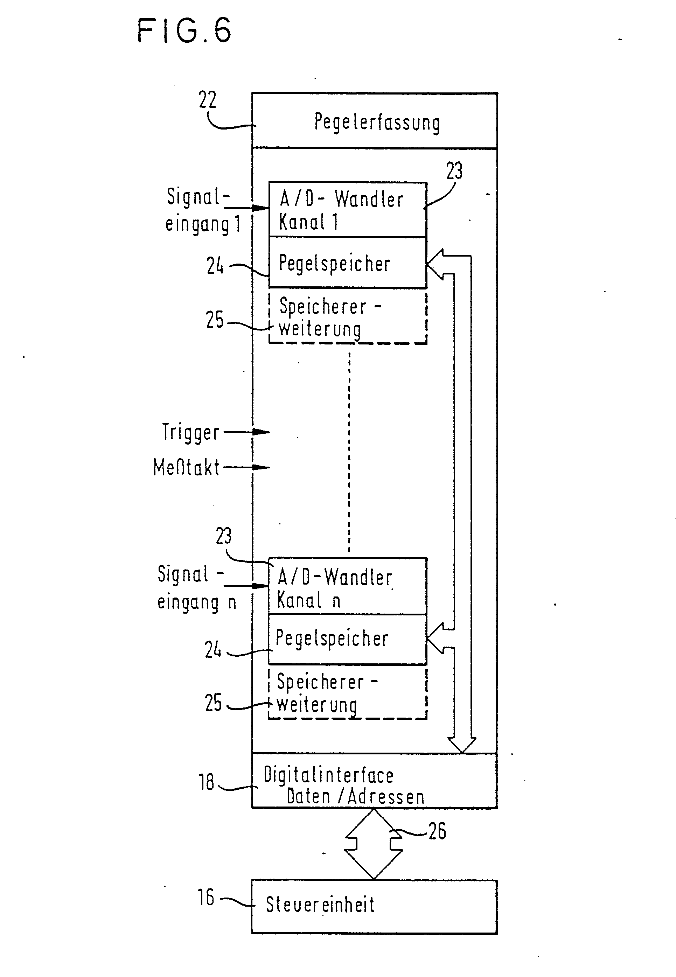

Der Funktionsblock Pegelerfassung 22 (Fig. 6) umfaßt eine spezielle Zusatzfunktion, für die zunächst die allgemeinen Kennzeichen der Moduln in dem Funktionsblock Zusatzfunktionen 17 zutreffen. Kanalweise ausbaubar werden über einen A/D-Wandler 23 mit entsprechender Steuerung sukzessive Meßwerte z. B. vom Prüfling usw. in einen digitalen Pegelspeicher 24 mit z. B. 32 k x 16 Bit geschrieben. Der Einlesetakt, beispielsweise synchron für alle Kanäle, wird über den Meßtakt der Basisfunktionen von dem synchronisierten Meßtaktausgang 15 gesteuert. Über einen Trigger können zusätzliche Marken, z. B. im höchstwertigen Bit bei reduzierter Auflösung, gesetzt werden. Der Meßtakt vom Meßtaktausgang 15 ist mit dem Auslesetakt synchronisiert und kann in einem programmierten Verhältnis zu diesem stehen bzw. modifiziert werden. Neben dem kontinuierlichen Beschreiben des Meßspeichers ist auch ein blockweises Beschreiben mit programmierten Pausen koordiniert mit dem Prüfablauf, z. B. Gleitsinusprüfung, kennzeichnend. Der Meßspeicher ist in verschiedenen Ausbaustufen möglich. Das Auslesen und Auswerten der so erfaßten Daten geschieht über das Digitalinterface 18 in der zentralen Steuereinheit 16 und ist beliebig online und/oder offline möglich. Signal- und Pegelspeicher in den Funktionsblöcken können identisch sein, und zwar Lese/Schreibspeicher, vorzugsweise vom Typ statisch, d. h. keine Zeitverschiebung durch sogenannten Refresh-Zyklus.

Um Signalsprünge bei Änderung von Signalamplitude und Signalphase zu vermeiden, lassen sich wahlweise per Programm Zähler einschalten, die die auftretenden Differenzen mit dem aktuellen Abtasttakt oder dem Basistakt ausgleichen, so daß ein quasi-stetiger Übergang erfolgt.

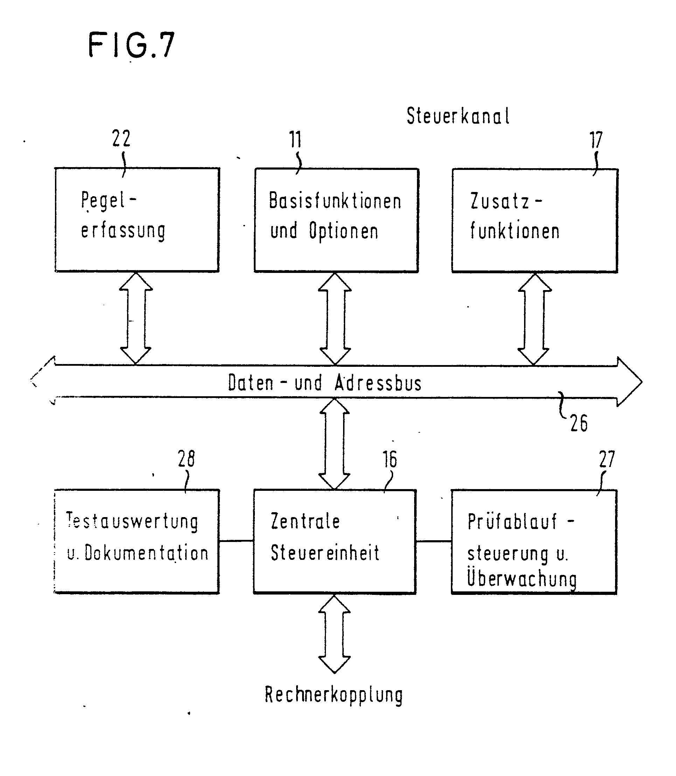

Fig. 7 zeigt in schematischer, blockweiser Darstellung die Funktionsblöcke 11, 17 und 22 sowie die zentrale Steuereinheit 16, die über einen bidirektionalen Daten- und Adreßbus 26 mit 16 Bit parallel kommunizierend geschaltet sind. Die zentrale Steuereinheit 16 weist eine Steuer- und Bedienkonsole auf und dient der Generierung und dem Laden von Prüfsignalverläufen, der Ablaufsteuerung mit Parametervorgabe und Überwachung, der Anlagenidentifizierung und Versuchsauswertung. Sie enthält beispielsweise ein Tischrechnersystem HP 85, HP 9826/36.

Die zentrale Steuereinheit 16 ist mit einer Einheit 27 für Prüfablaufsteuerung und -überwachung verbunden, mit deren Hilfe Schwingungsprüfungen Sinus, Gleitsinus, Sinusbeat, Echtzeitverläufe, Transienten, Schock, Rauschen, stochastische Prozesse, Lebensdauertests, Blockprogramme, Markov'sche Prozesse und Zusatzfunktionen wie Temperatursteuerung durchgeführt werden können. Weiter ist die zentrale Steuereinheit 16 mit einer Einheit 28 für Testauswertung und Dokumentation verbunden, die insbesondere für Pegelverläufe (quadratischer Mittelwert, Grund- und Oberschwingungen) für Anregung und Prüfling, für Fourrierspektren, Übertragungsfunktionen, Antwortspektren, für Zeitverläufe, Histogramme, Verteilungsfunktionen und für Prüfprotokolle, Text und Grafik verantwortlich ist.

Mit dem beschriebenen Verfahren und der zugehörigen Einrichtung kann die Steuerung bzw. Regelung mehrerer Prüfbetriebe als Mehrachsensteuerung/-regelung erfolgen. Mehrachsensteuerung im eigentlichen Sinne liegt dann vor, wenn zwischen mehreren Prüfantrieben Koppelungen auftreten, z. B. dadurch, daß sie gemeinsam an einer Struktur bzw. an einem Prüfaufbau angreifen. Diese Koppelungen lassen sich z. B. durch das Übertragungsverhalten zwischen zwei Püfantrieben in Form von Übertragungsfunktionen kennzeichnen. Das Übertragungsverhalten der Gesamtanlage wird dann durch eine sogenannte Übertragungsmatrix beschrieben, wobei die Diagonalfunktionen in der Regel die einzelnen Prüfantriebe in ihrem Zusammenwirken mit dem Prüfaufbau und die restlichen Funktionen die Koppelung zwischen den Prüfantrieben einschließlich ihrer Wechselwirkung mit dem Prüfaufbau beschreiben.

Für Mehrachsen- bzw. Mehrkanalsteuerung bzw. -regelung werden an den Daten- und Adreßbus 16 die entsprechende Anzahl von Funktionseinheiten angeschlossen, gegebenenfalls auch aufgeteilt auf mehrere Busleitungen mit der entsprechenden Anzahl von Ein-/Ausgabe-Schnittstellen. Per Programm sind über die gemeinsame zentrale Steuereinheit 16 für jeden Kanal beliebige Signalverläufe definierbar und deren Parameter programmiert veränderbar. Insbesondere ist es möglich, die einzelnen Steuer-/Regelfunktionen entsprechend den oben angegebenen Erfordernissen des Mehrachsenbetriebes aufeinander abzustimmen. Dies geschieht jeweils programmiert über die zentrale Steuereinheit 16, wobei die einzelnen Steuersignale vorab mit der inversen Übertragungsmatrix korrigiert werden, um Übertragungs- und Koppelungsrückwirkungen zu beseitigen. Dies läßt sich aber auch im Zeitbereich durch entsprechend gekoppelte digitale Filter (vgl. Schnittstelle für digitale Zusatzfunktionen 12 und weitere Funktionsmoduln 21) mit Parametervorgabe durch die zentrale Steuereinheit 16 bewirken.

Zur Erzielung eines einheitlichen Abtastverhaltens des Gesamtsystems wird ein gemeinsamer Basistakt für alle Zeit- bzw. Frequenzgeber 6 verwendet.

**Patentansprüche**

1. Verfahren zum Erzeugen eines Steuersignals zum Steuern und/oder Regeln von ein- oder mehrachsigen Schwingungs-oder Betriebsfestigkeitsprüfanlagen unter Einsatz von elektrodynamischen und/oder hydraulischen Prüfantrieben, bei welchem beliebig vorgegebene Steuersignalverläufe in digitaler Form abgelegt werden, wobei ein Haupt- und gegebenenfalls ein Hilfssignal aus den abgelegten Steuersignaldaten erzeugt wird/werden und miteinander verknüpft werden, der Ausgabetakt der abgelegten Steuersignaldaten in einem vorgegebenen Basis-Intervall mit vorgebbarer Tastfrequenz mit feiner Auflösung vorgegeben wird, die Signalform eines abgelegten Steuersignalverlaufs in wenigstens einem seiner Parameter während des Programmablaufs verändert wird, und eine Amplituden- bzw. Pegelregelung mit gleitendem Sollwertverlauf durchgeführt wird.

2. Verfahren nach Anspruch 1, dadurch gekennzeichnet, daß bei der Sollwertvorgabe der Prüfantriebs-Frequenzgang berücksichtigt wird.

3. Verfahren nach Anspruch 1 oder 2, dadurch gekennzeichnet, daß die Erfassung von Meßsignalen in einem festen Frequenzraster zur Ansteuerung erfolgt.

4. Verfahren nach Anspruch 1, 2 oder 3, dadurch gekennzeichnet, daß mehrere Prüfantriebe gekoppelt und über mehrere synchronisierte Kanäle mehrachsig bzw. mehrkanalig gesteuert bzw. geregelt werden.

5. Einrichtung zur Durchführung des Verfahrens nach einem der vorhergehenden Ansprüche, dadurch gekennzeichnet, daß drei Funktionsblöcke Basisfunktionen und Optionen (11), Zusatzfunktionen (17) und Pegelerfassung (22) sowie eine zentrale Steuer-, Bedien- und Auswerteinheit (16) über digitale Daten- und Adreßleitungen (26) kommunizierend geschaltet sind.

6. Einrichtung nach Anspruch 5, dadurch gekennzeichnet, daß mehrere synchronisierte Gruppen von Funktionsblöcken (11, 17, 22) für mehrachsige bzw. mehrkanalige Steuerung bzw. Regelung mit der zentralen Steuereinheit (16) kommunizierend geschaltet sind.

7. Einrichtung nach Anspruch 5 oder 6, dadurch gekennzeichnet, daß der Funktionsblock Basisfunktionen und Optionen (11) einen auf eine Speicherverwaltung (7) geschalteten Zeitbzw. Frequenzgeber (6), einen mit der Speicherverwaltung (7) verbundenen ersten Signalspeicher (1a), einen ersten D/A-Wandler (2a) und ein Analgomodul (5) mit zusätzlichem Analogeingang (3) zur Ausgabe des Steuersignals aufweist, die mit einem Digitalinterface (10) verbunden sind, einen zweiten Signalspeicher (1b) und einen zweiten D/A-Wandler (2b) aufweist, die mit einer Schnittstelle (12) für digitale Zusatzfunktionen verbunden sind, und einen Phasenmodul (8)'mit Phasenkorrektureingang (14) und eine Anzeigeeinheit (9) aufweist, wobei der Zeit- bzw. Frequenzgeber (6) einen Synchronisiertakteingang und einen synchronisierten Meßtaktausgang (15) hat (Fig. 1).

8. Einrichtung nach Anspruch 7, dadurch gekennzeichnet, daß der Analogmodul (5) einen Analogausgang Sollwertvorgabe (13) aufweist.

9. Einrichtung nach einem der Ansprüche 5 bis 8, dadurch gekennzeichnet, daß der Funktionsblock Zusatzfunktionen (17) eine Amplitudenregeleinrichtung (19), eine Phasenregeleinrichtung (20) und weitere Funktionsmoduln (21) aufweist, die mit einem Digitalinterface (18) verbunden sind (Fig. 3).

10. Einrichtung nach einem der Ansprüche 5 bis 9, dadurch gekennzeichnet, daß der Funktionsblock Pegelerfassung (22) je Kanal einen A/D-Wandler (23), einen Pegelspeicher (24) und eine Speichererweiterung (25) aufweist, die mit einem Digitalinterface (18) verbunden sind (Fig. 6).

11. Einrichtung nach einem der Ansprüche 5 bis 10, dadurch gekennzeichnet, daß die zentrale Steuereinheit (16) mit einer Einheit (27) für Prüfablaufsteuerung und -überwachung und einer Einheit (28) für Testauswertung und Dokumentation verbunden ist.

12. Einrichtung nach einem der Ansprüche 5 bis 11, dadurch gekennzeichnet, daß die Funktionsblöcke (11, 17, 22) und die zentrale Steuereinheit (16) über einen bidirektionalen Daten- und Adreßbus m·t 16 Bit parallel kommunizierend geschaltet sind.

**Claims**

1. Process for producing a control signal for controlling and/or regulating monoaxial or multiaxial vibratine and quality control test stands usine electrodynamic and/or hydraulic test drives, in which arbitrarily preset control signal characteristics are filed in digital form, a main signal and if necessary an auxiliary signal from the filed control signal data being generated and coupled to one another, the output pulse of the filed control signal data is preset in a specified base interval with presettable pulse frequency with fine resolution, the signal shape of a filed control signal characteristic is altered in at least one of its parameters during the program sequence, and an amplitude/level regulation is carried out with sweep control value characteristics.

2. Process according to claim 1, characterised in that the test drive frequency response is taken into account in presetting the control value.

3. Process according to claim 1 or 2, characterised in that the measurement signals are collected in a fixed frequency raster for the control.

4. Process according to claims 1, 2 or 3, characterised in that several test drives are coupled and are controlled/regulated in a multiaxial/multichannel manner via several synchronised channels.

5. Device for carrying out the process according to one of the preceding claims, characterised in that three fonctional blocks, viz. base functions and options (11), ancillary functions (17) and level acquisition (22) as well as a central control, operation and evaluation unit (16) are connected in a communicating manner via digital data and address lines (26).

6. Device according to claim 5, characterised in that several synchronised groups of functional blocks (11, 17, 22) for multiaxial/multichannel control and regulation are connected in a communicating manner to the central control unit (16).

7. Device according to claim 5 or 6, characterised in that the functional block base functions and options (11) includes a time/frequency generator (6) connected to a memory management (7), a first signal memory (1a) connected to the memory management (7), a first D/A converter (2a) and an analog module (5) with additional analog input (3) for output of the control signal, all of the above being connected to a digital interface (10), and also includes a second signal memory (1b) and a second D/A converter (2b). which are connected to an interface (12) for digital ancillary functions, as well as a phase module (8) with phase correction input (14) and a display unit (9), wherein the time/frequency generator (6) has a synchronisation pulse input and a synchronised measurement pulse output (15) (Fig. 1).

8. Device according to claim 7, characterised in that the analog module (5) has an analog output control value presetting (13).

9. Device according to one of claims 5 to 8, characterised in that the functional block auxiliary functions (17) has an amplitude regulation device (19) a phase regulation device (20) and further functional modules (21), which are connected to a digital interface (18) (fig. 3).

10. Device according to one of claims 5 to 9, characterised in that the functional block level acquisition (22) has one A/D converter (23) per channel, a level memory (24) and a memory expansion (25), which are connected to a digital interface (18) (Fig. 6).

11. Device according to one of claims 5 to 10, characterised in that the central control unit (16) is connected to a unit (27) for test sequence control and monitoring, and to a unit (28) for test evaluation and documentation.

12. Device according to one of claims 5 to 11, characterised in that the functional blocks (11, 17, 22) and the central control unit (16) are connected in parallel in a communicating manner via a bidirectional data and address bus with 16 bits.

**Revendications**

1. Procédé de production d'un signal de commande pour la commande et/ou la régulation d'installations d'essai de solidité fonctionnelle ou de résistance aux vibrations, sur un seul axe ou sur plusieurs axes, utilisant des entraînements d'essai électrodynamiques et/ou hydrauliques, dans lequel des profils de signaux de commande prédéterminés quelconque choisis sont stockés sous forme numérique, où un signal principal et éventuellement un signal auxiliaire est/sont produits à partir des données de signaux de commande stockées et combinés, le rythme de sortie des données de signaux de commande stockées est pré-établi, avec une fine résolution, dans un intervalle de base prédéterminé, avec fréquence de répétition prédéterminée, la forme d'un profil de signal de commande stocké est modifiée en au moins un de ses paramètres pendant l'exécution du programme, et une régulation d'amplitude ou de niveau est effectuée avec valeur de consigne mobile.

2. Procédé selon la revendication 1, caractérisé en ce que, lors de l'introduction de la valeur de consigne, on tient compte de la réponse en fréquence de l'entraînement d'essai.

3. Procédé selon la revendication 1 ou 2, caractérisé en ce que la saisie de signaux de mesure s'effectue dans une trame de fréquence fixe pour la commande.

4. Procédé selon la revendication 1, 2 ou 3, caractérisé en ce que plusieurs entraînements d'essai sont couplés et, par plusieurs canaux synchronisés, sont commandés ou régulés sur plusieurs axes ou plusieurs canaux.

5. Dispositif de mise en oeuvre du procédé selon l'une des revendications précédentes, caractérisé en ce que trois blocs fonctionnels, fonctions de base et options (11), fonctions supplémentaires (17) et saisie niveau (22), ainsi qu'une unité centrale de commande, intervention et interprétation (16), sont connectés de manière à communiquer par des lignes de données et d'adresses numériques (26).

6. Dispositif selon la revendication 5, caractérisé en ce que pour la commande ou la régulation sur plusieurs axes ou plusieurs canaux, plusieurs groupes synchronisés de blocs fonctionnels (11, 17, 22) sont connectés pour communiquer avec l'unité centrale de commande (16).

7. Dispositif selon la revendication 5 ou 6, caractérisé en ce que le bloc fonctionnel Fonctions de base et options (11) présente une horloge ou générateur de fréquence (6) branché sur une Gestion mémoire (7), une première mémoire de signaux (1a) reliée à la Gestion mémoire (7), un premier convertisseur numérique/analogique (2a) et un module analogique (5) avec entrée analogique supplémentaire (3) pour la sortie du signal de commande, lesquels sont reliés à une interface numérique (10), présente une deuxième mémoire de signaux (1b) et un deuxième convertisseur numérique/analogique (2b) qui sont reliés à une interface (12) pour fonctions supplémentaires numériques, et présente un module de phase (8) avec entrée (14) de correction de phase et une unité d'affichage (9), et en ce que l'horloge ou générateur de fréquence (6) possède une entrée de signal d'horloge pour synchronisation et une sortie Signal d'horloge synchrone pour mesure (15) (Figure 1).

8. Dispositif selon la revendication 7, caractérisé en ce que le module analogique (5) présente une sortie analogique introduction valeur de consigne (13).

9. Dispositif selon l'une des revendications 5 à 8, caractérisé en ce que le bloc fonctionnel Fonctions supplémentaires (17) présente un dispositif de régulation d'amplitude (19), un dispositif de régulation de phase (20) et d'autres modules fonctionnels (21), lesquels sont en liaison avec une interface numérique (18) (figure 3).

10. Dispositif selon l'une des revendications 5 à 9, caractérisé en ce que le bloc fonctionnel Saisie niveau (22) présente, pour chaque canal, un convertisseur analogique/numérique (23), une mémoire de niveau (24) et une extension mémoire (25) qui sont en liaison avec une interface numérique (18) (figure 6).

11. Dispositif selon l'une quelconque des revendications 5 à 10, caractérisé en ce que l'unité de commande centrale (16) est reliée à une unité (27) pour commande et contrôle du déroulement de l'essai, et à une unité (28) pour l'interprétation de l'essai et la documentation.

12. Dispositif selon l'une des revendications 5 à 11, caractérisé en ce que les blocs fonctionnels (11, 17, 22) et l'unité centrale de commande (16) sont connectés de manière à communiquer en parallèle, par un bus bidirectionnel de données et d'adresses, à 16 bits.

# FIG.1

## FIG.2

D/A- Wandler A/B
2

DAC 1 → DAC 2 → Signal A/B

↑ Amplitude
Amplituden-korrektur
↑ Signal-form

## FIG.4

Prüfantrieb
Steuersignal

Amplitudenmessung
(Istwert)

I
II

Amplituden-aufbereitung

Istwert
19

13 Sollwertvorgabe

Regler(z.B. PID) mit
Soll/Ist vergleich

Amplitudenkorrektur
3 (Stellgröße)

Regel-abweichung

Trigger ◀— Regelüberwach.

## FIG.5

Meßsignal, z.B.
Prüflingsantwort
20

Phasentrigger

(Bezugspkt. z.B. über
Signaltrigger)

Phasenaufbereitung

Phase
analog
digital

14

Phasenregler
Soll-wert

Stell-größe

FIG.3

# FIG.6

# FIG.7

Steuerkanal

```
    22                    11                    17
┌──────────────┐  ┌──────────────┐  ┌──────────────┐
│  Pegel -     │  │ Basisfunktionen│ │  Zusatz-     │
│  erfassung   │  │ und Optionen  │  │  funktionen  │
└──────────────┘  └──────────────┘  └──────────────┘
        ⇕                 ⇕                 ⇕
```

Daten - und Adressbus                                    26

```
    28                    16                    27
┌──────────────┐  ┌──────────────┐  ┌──────────────┐
│ Testauswertung│ │ Zentrale     │  │ Prüfablauf - │
│ u. Dokumentation│ Steuereinheit │  │ steuerung u. │
│              │  │              │  │ Überwachung  │
└──────────────┘  └──────────────┘  └──────────────┘
                          ⇕
```

Rechnerkopplung